# EUROPEAN PATENT APPLICATION

(11) **EP 3 088 780 A1**
(43) Date of publication of application: **02.11.2016**
(21) Application number: 15165527.1
(22) Date of filing: 28.04.2015
(51) Int. Cl.: F16K 31/126, G05D 7/00, F16K 37/00

(54) **VALVE POSITIONER FOR PROCESS CONTROL VALVES**

(71) Applicant: Foxboro Eckardt Gmbh, 70376 Stuttgart (DE)
(72) Inventor: Wick, Michael, 70193 Stuttgart (DE)
(74) Representative: Andrae | Westendorp Patentanwälte Partnerschaft

(57) **Abstract**

The invention relates to a valve positioner (10) for process control valves having a housing (100), pneumatic components within the housing, a pressure supply input channel (147) and at least one pressure outlet channel (146; 148), wherein internal threads are provided at the pressure supply input channel (147) and at the at least one pressure outlet channel (146; 148), wherein the valve positioner (10) further comprises a connection bar (110) comprising the internal threads.

## Description

The subject matter disclosed herein relates to a valve positioner for control valves.

Valve positioners for control valves are integrated into process control systems in a wide variety of industries. The control valves are regulates to control the transmission and distribution of liquid or gaseous process fluids.

The valve positioners are designed to receive control signals from a process control system. For instance electric signals are used for the communication between the process control system and the valve positioner. Different communication protocols are used including versions with analog setpoint (4 to 20 mA) without communication or with superimposed HART signal; digital with FoxCom protocol, or fieldbus communication according to PROFIBUS-PA and FOUNDATION Fieldbus HI based on IEC 1158-2 MBP according to FISCO.

The valve positioners are designed to convert these electric signals to an output pressure for a pneumatic actuator of the control valve. Therefore the valve positioners comprise an electronic unit designed to drive an electro-pneumatic converter (e.g. I/P-modules) controlling a pneumatic pre-amplifier and/or a pneumatic power amplifier which can be for instance a single acting or a double acting pneumatic power amplifier.

The valve positioners have a pressure supply of for instance 1.4 to 6 bar (20 to 90 psig). This pressure is supplied to the pneumatic components, i.e. the electro-pneumatic converter and the pneumatic pre-amplifier and/or the pneumatic power amplifiers. The output pressure is supplied to the pneumatic actuator to control the control valves.

The valve positioner has a housing with pneumatic connections. These pneumatic connections have internal threads to be used to connect pressure lines for the supply pressure and the output pressure.

In the process industry different threads are used depending on the geographical region, size of the pressure system and the environment. For example, many pressure systems onboard ships use BSPP (British Standard Parallel Pipe) connections while many applications in the oil and gas industry use NPT (National Pipe Thread) connections.

NPT (National Pipe Thread) seals are the most popular type of seal for pressure calibration systems in the U.S. and Canada. NPT male adapters have a taper thread that wedges into the female NPT adapter. They seal due to the "out of roundness principle" which means that the male stretches the female fitting until there is so much force that the connection can hold pressure. One of the challenges with this design is that if you connect stainless steel to stainless steel then over-tightening or poor lubrication can cause gauling and damage to the threads. Thread sealant is needed to seal but only 2 turns of thread sealant is required. Any more than that and the seal can leak around the thread sealant.

BSPT (British Standard Pipe Thread) is similar to NPT except for one important difference. The angle across the flanks of threads (if you sliced the fitting in half long-ways and measured the angle from root to crest to root) is 55 degrees instead of 60 degrees as it is for NPT. Thus an NPT male will fit into a BSPT fitting or vice versa but they will not seal.

BSPP (British Standard Parallel Pipe) is most popular in the UK, Europe, Asia, Australia, New Zealand and South Africa. It is a parallel thread fitting that uses a bonded seal ring to do the sealing. This bonded ring seal is sandwiched in-between a shoulder on the male fitting and the face of the female fitting and is squeezed in place. BSPP pressure gauges have a longer male thread and use a copper crush washer that is squeezed in between the bottom of the male fitting and the bottom of the female BSPP hole forming a pressure tight seal. No thread sealant is needed to form a seal. For valve positioners for instance G1/4 (1/4 inch) threads are used.

The valve positioners known to the skilled person have these threads for connection the pressure supply and the pressure output integrated into the wall of the housing.

The pneumatic components of the valve positioners need to be protected by filter means which are placed at the end of the pressure supply lines making the assembly and maintenance difficult.

An object of the invention is to provide a valve positioner wherein filter elements can easily assembled and replaced.

This object is achieved with a valve positioner according to claim 1. Preferred embodiments are disclosed in the dependent claims.

According to the invention there is provided a valve positioner for process control valves, the valve positioner having a housing, pneumatic components within the housing, a pressure supply input channel and at least one pressure outlet channel, wherein internal threads are provided at the pressure supply input channel and at the at least one pressure outlet channel, wherein the valve positioner further comprises a connection bar comprising the internal threads.

According to the invention the threads can be at least one of NPT threads, BSPT threads, BSPP threads or similar corresponding threads.

According to the invention the connection bar can be bolted to the housing.

According to the invention a filter member can be disposed between the pressure supply input channel of the connection bar and the pressure supply input channel of the housing.

According to the invention sealing members can be disposed between the at least one pressure outlet channel of the connection bar and the at least one pressure outlet channel of the housing.

According to the invention an adapter bar can be mounted between the housing and the connection bar.

According to the invention at least one manometer and preferably two or three manometers can be mounted to the adapter bar.

At least some of these embodiments of the invention provide one or more of the following advantages over the prior art valve positioners:
- A filter can be placed between the connection bar and the housing and does not need to be placed at the end of the pressure line. This facilitates filter assembly and maintenance.
- Because the connection bar can be made out of a machined block, the sealing between the pressure lines and the internal threads can be improved. The improved sealing can be achieved because a machined block has compared to a cast housing less inhomogenities. Therefore a harder and smoother surface for the thread region can be provided resulting in a better sealing. Furthermore the thread connection between the connection bar and the pressure lines will last longer and will not wear out as fast as the thread connection of the prior art valve positioners.
- The connection bar can be equipped with different threads. There is no need for different housings.
- In case the internal thread for connecting the pressure supply line or pressure output line is worn out the connection bar can be replaced instead of the whole housing/positioner.

At valve positioners known to the skilled person the pressure supply input channel and the at least one pressure outlet channel extending in the wall of the housing have to be adapted to the positions of the pneumatic components. Therefore the pressure supply input channel and the at least one pressure outlet channel have bends and in some regions relative small cross-sections. Also each housing needs to be adapted to the different needs of the pneumatic components the valve positioner is equipped with.

Therefore another object of the invention is to provide a valve positioner having a pneumatic system with high efficiency and which can be adapted to different needs and purposes.

This object is achieved with a valve positioner according to claim 6. Preferred embodiments are disclosed in the dependent claims.

According to the invention there is provided a valve positioner for process control valves especially according to any of the preceding claims, the valve positioner having a housing, pneumatic components within the housing, a pressure supply input channel and at least one pressure outlet channel, wherein the pressure supply input channel and the at least one pressure outlet channel are extending in a wall of the housing, wherein the valve positioner further comprises a pneumatic adapter member connected to the pressure supply input channel and/or the at least one pressure outlet channel.

According to the invention the pneumatic adapter member can comprise pressure lines for connecting the pressure supply input channel and/or the at least one pressure outlet channel with the pneumatic components of the valve positioner.

According to the invention the pressure supply input channel and/or the at least one pressure outlet channel extending in a wall of the housing can extend from the connection bar to the pneumatic adapter member.

According to the invention the pressure supply input channel and/or the at least one pressure outlet channel extending in a wall of the housing can extend directly from the connection bar to the pneumatic adapter member.

According to the invention the pressure supply input channel and/or the at least one pressure outlet channel extending in a wall of the housing can extend parallel to each other.

According to the invention the pressure supply input channel and/or the at least one pressure outlet channel extending in a wall of the housing each can have including its walls a width of about one third to about one sixth of the width of the housing.

According to the invention the pressure supply input channel and/or the at least one pressure outlet channel can have a cross-section area which is similar to the cross-section area of the pressure lines to be connected to the connection bar.

According to the invention an electro-pneumatic converter, and/or a pneumatic amplifier and/or a pneumatic pre-amplifier can be connected to the pneumatic adapter member.

According to the invention the pneumatic components can comprise an electro-pneumatic converter, and/or a pneumatic amplifier and/or a pneumatic pre-amplifier.

According to the invention elongated holes can be provided as openings for the pressure lines and/or pressure channels in the housing wall such that different pneumatic adapter members can fit more easily to the openings.

According to the invention the valve positioner can further comprise a pressure reducing member.

According to the invention the pressure reducing member can be disposed within the pneumatic adapter member.

At least some of these embodiments of the invention provide one or more of the following advantages over the prior art valve positioners:
- The cross-section of pressure supply input channel and/or the at least one pressure outlet channel can be made as large as possible. Thereby a better efficiency of the pneumatic system can be achieved due to less pressure reductions.
- The pressure channels inside the housing wall can have a larger cross section as known from prior art valve positioners because the channels can be designed straight and without curves. This provides a better efficiency.
- In the pneumatic adapter member the lines to the pneumatic components (for instance the electric-pneumatic converter, the I/P converter, the pressure pre-amplifier, the pressure amplifier) can have a larger cross section compared to the curved pressure channels in the housing wall. This provides a better efficiency.
- One standard housing can be equipped with different pneumatic adapter members for different purposes.
- One design of the pressure supply input channel and/or the at least one pressure outlet channel can be used for different versions of the valve positioner because the pneumatic adapter member can be adapted to the different needs for the connection of the pneumatic components.
- The same housing can be used with a set of different pneumatic adapter members. These different pneumatic adapter members can have the same connections to the pressure supply input channel and/or the at least one pressure outlet channel, but different connections for the connection to the pneumatic components.
- The sealing between the pneumatic components and the housing can be improved.
- The pneumatic adapter member can be bolted to the housing and the pneumatic components can be bolted to the pneumatic adapter member.
- The pneumatic adapter member can be machined providing a better sealing and efficiency.
- Higher pressures can be provided. In the prior art valve positioners pressures up to 6 bar could be provided. Due to the better efficiency pressures up to 10 bar are possible.

At valve positioners known to the skilled person the electronic circuit board in mounted in the housing beneath a cover extending over the whole circuit board. At the electronic circuit board there is a terminal for connecting the power supply to the electronics. The power supply can be the field bus used for transmitting the signal to the valve positioned. In order to prevent the electronic circuit board and its components to be damaged by connection the power supply to the terminal, the electronic circuit board need to be protected by a protection shield to be disposed over the electronic circuit board. Furthermore some valve positioners known to the skilled person comprise a selecting switch to set desired settings of the valve positioner. These selecting switches are mounted onto the electronic circuit board and are disposed within the housing. Therefore the housing needs to be opened for providing access to the selecting switch. Also for that reason the electronic circuit board needs to be protected against damages when the selecting switch will be operated.

Therefore another object of the invention is to provide a valve positioner wherein the power supply can be connected to the terminal without the risk of damaging the electronics.

This object is achieved with a valve positioner according to claim 11. Preferred embodiments are disclosed in the dependent claims.

According to the invention there is provided a valve positioner for process control valves, the valve positioner having a housing, an electronic circuit board with a terminal for connection the electric power supply to the electronic circuit board, an opening for the terminal, and a cover to cover the opening, the electronic circuit board having a board width, and the opening having a opening width, wherein the opening width of the opening is less than the board width of the electronic circuit board.

According to the invention there is provided a valve positioner for process control valves especially according to any of the preceding claims, the valve positioner having a housing, an electronic circuit board with a terminal for connection the electric power supply to the electronic circuit board, the housing having an lower portion and an upper portion, wherein one of lower portion and an upper portion having a wall covering the printed circuit board and having an/the opening for the terminal.

According to the invention the upper portion can cover the electronic circuit board and/or the opening can be provided in the upper portion of the housing.

According to the invention the lower portion can cover the electronic circuit board and/or the opening can be provided in the lower portion of the housing.

According to the invention the valve positioner can further comprise a selector switch, wherein selector switch is mounted on the electronic circuit board, and wherein the selector switch in disposed in the opening or in another opening in the wall.

According to the invention the housing can have a terminal compartment and an electronic compartment which are preferably separated by a wall. The wall separating the terminal compartment from the electronic compartment can have an opening for the terminal. The terminal can be disposed such that the connections for the power supply are within the terminal compartment and that the connection of the terminal to the electronic circuit board is within the electronic compartment. Preferably there is a cover to close the terminal compartment. The housing can comprise two portion which enclose the electronic compartment. Preferably a selecting switch can also disposed such that portion for handling the switch is within the terminal compartment and that the connection of selecting switch to the electronic circuit board is within the electronic compartment.

According to the invention the cover can have a metallic inside. The metallic inside of the cover can be connected to ground (or the minus pole).

According to the invention, the valve positioner can be an intrisically safe valve positioner. Such valve positioner do not need to have a pressure proof housing because the electronics is designed to be explosion protecting for instance due to low energy consumption and/or the electronics is protected with a cover of casting and/or sealing compound. Such intrisically safe valve positioners can preferably have a housing with an upper portion, an lower portion and a cover. The upper portion and the lower portion can be designed to enclose the electronics and the cover can be arranged and designed to cover an electric terminal for connecting the power supply. Preferably the terminal may be located in a terminal section being separated from an electronics section housing the electronics. For the separation a wall between the section can be provided. Alternatively and/or in addition the housing of such intrisically safe valve positioners can be designed as three-part housings. The three or more parts of the housing can comprise the upper portion, the lower portion and the cover.

At least some of these embodiments of the invention provide one or more of the following advantages over the prior art valve positioners:
- The terminal is separated from the rest of the electronic circuit board and arranged within a small opening. Thereby the electronic circuit board is protected behind the wall where the opening for the terminal is made in. The housing opening can be covered with a cover to close the housing.
- The selecting switch is also separated from the rest of the electronic circuit board.
- Due to the separation of the circuit board, the electronics on the circuit board are protected against damages when the power supply is connected to the terminal and/or the selecting switch is operated.
- The electronics on the electronic circuit board and other electronics can be protected when the signal line will be connected to the connection terminals of the positioner.

Details of the invention may further elucidated from the following explanation of working examples and exemplary embodiments, some of which are shown in the appended drawings, wherein
- Fig. 1: is a section view of a valve positioner according to an embodiment of the invention.
- Fig. 2: is a perspective view of the positioner of Fig. 1 wherein the cover has been dismounted.
- Fig. 3: is a perspective explosive view of the valve positioner of Fig. 1 showing two different optional connection bars.
- Fig. 4: is a partial sectional view of the pressure input supply channel of the valve positioner of Fig. 1 with a filter member.
- Fig. 5: is a side view of the valve positioner of Fig. 1 from the side having the connection bar.
- Fig. 6: is a partial view of the lower part of the housing of the valve positioner of Fig. 1.
- Fig. 7: is a partial sectional view of the lower part of the housing of the valve positioner of Fig. 1 in a plane parallel to the plane of Fig. 6 extending through the pressure channels.
- Fig. 8: is a partial sectional view of the lower part of the housing of the valve positioner of Fig. 1 with pneumatic components.
- Fig. 9: is a perspective explosive view of the valve positioner of Fig. 1 with an optional manometer bar.
- Fig. 10: is a partial sectional view of the pressure input supply channel of the valve positioner of Fig. 9 with a filter member corresponding to Fig. 4.

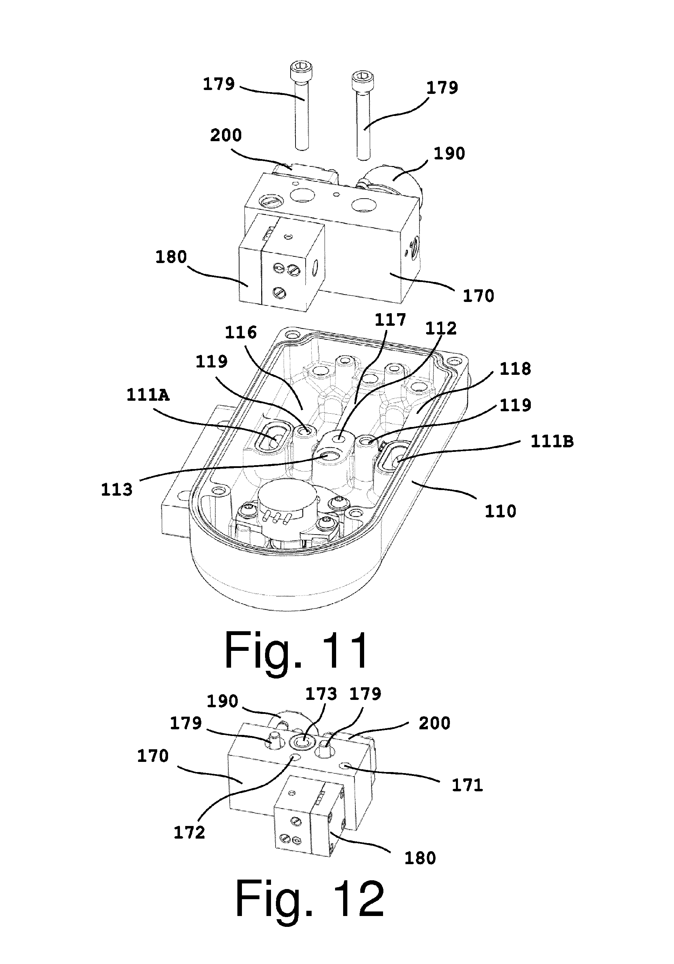

- Fig. 11: is a perspective explosive view of the lower portion of the valve positioner of Fig. 1 with the pneumatic adapter member and some pneumatic components.
- Fig. 12: is a perspective view of the pneumatic adapter member and the pneumatic components as seen from the other side to be mounted to the lower portion of the housing as shown in Fig. 11.
- Fig. 13: is a perspective sectional view of the pneumatic adapter member of Fig. 11 with the pneumatic components as shown in Figs. 11 to 12.
- Fig. 14: is a perspective sectional view corresponding to Fig. 13 showing an alternative pneumatic adapter member and respective corresponding pneumatic components.
- Fig. 15: is a perspective sectional view of the pneumatic adapter member of Fig. 13, wherein a pressure reducing member in one connection line is shown.
- Fig. 16: is a bottom view of the upper portion of the housing of the positioner of Fig. 1 showing the electronic circuit board (or printed circuit board) and the width thereof.

The following reference numerals are used within this description:
- 10: positioner
- 100: housing
- 101: terminal compartment
- 102: electronic compartment
- 110: lower part
- 111A: pressure line
- 111B: pressure line
- 112: pressure line
- 113: pressure line
- 114: thread
- 116: pressure channel
- 117: pressure channel
- 118: pressure channel
- 119: thread
- 120: upper part
- 121: opening
- 122: wall
- 123: terminal opening
- 124: selecting switch opening
- 130: cover
- 131: sealing
- 140: connection bar
- 141: sealing element (O-Ring)
- 142: sealing element (O-Ring)
- 144: hole
- 145: hole
- 146: pressure channel (output pressure)
- 147: pressure channel (pressure supply)
- 146: pressure channel (output pressure)
- 148: pressure channel (output pressure)
- 149: bolt
- 150: filter member
- 151: sealing element
- 160: electronic circuit board
- 161: terminal
- 162: selecting switch
- 163: left side of electronic circuit board
- 164: right side of electronic circuit board
- 165: width of the electronic circuit board
- 170: pneumatic adapter member
- 171: connection line
- 172: connection line
- 173: connection line
- 174: connection line
- 175: connection line
- 176: ball
- 177: ball
- 178: thread
- 179: bolt
- 180: pneumatic amplifier
- 181: bolt
- 190: electro-pneumatic converter
- 191: signal input line
- 200: pneumatic pre-amplifier
- 210: adapter bar
- 211: sealing element (O-Ring)
- 212: sealing element (O-Ring)
- 213: sealing element (O-Ring)
- 216: pressure channel
- 217: pressure channel
- 218: pressure channel
- 226: manometer
- 227: manometer
- 228: manometer
- 230: pressure reducing valve
- 231: spring
- 232: ball
- 233: valve member
- 234: spring

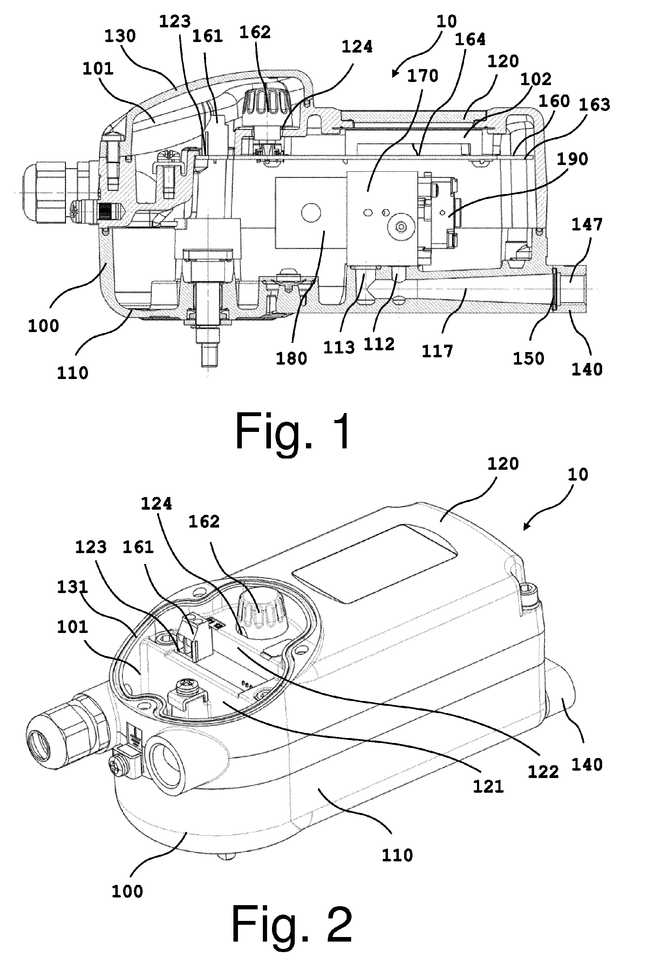

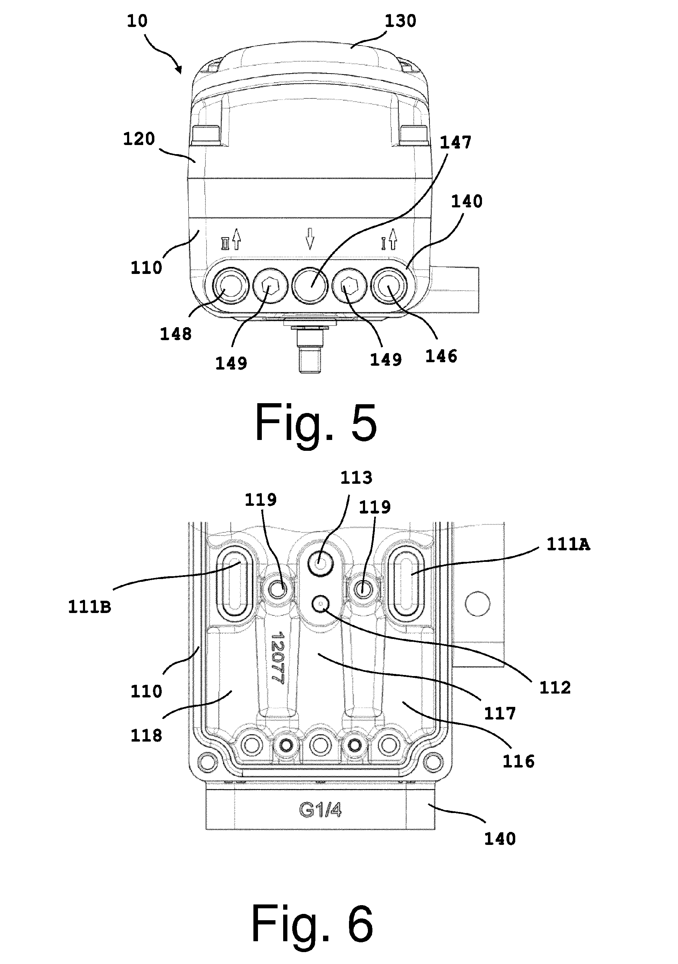

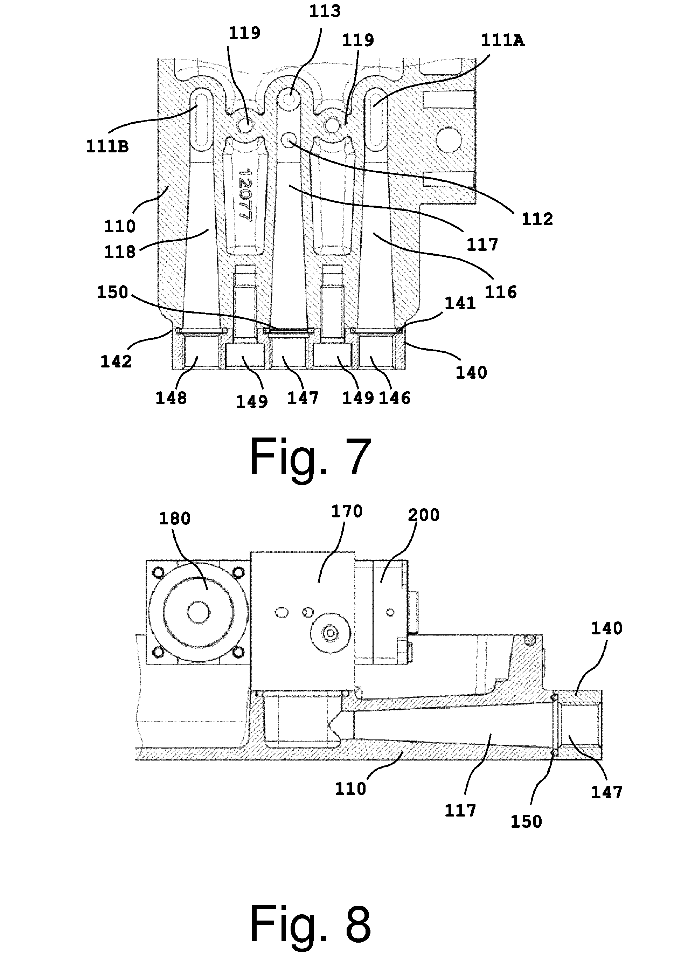

Figs. 1 to 8 show a first embodiment of the valve positioner 10 in accordance with the invention. The valve positioner comprises a housing 10 having a lower portion 110 and an upper portion 120.

In the bottom wall of the lower portion 111A there are provided three pressure channels 116, 117 and 118.

The pressure channel 117 is for the pressure supply and the pressure channels 116 and 118 are for the pressure output. If only one pressure output is used, the other pressure output channel must not be used. More than one pressure input channel and more than two pressure output channels may be provided. Alternatively and/or in addition the pressure channels can provided in the side walls of the lower portion and/or in any wall of the upper portion.

At pressure channel 117 there are two pressure lines 112 and 113 opening into the interior of the housing. At pressure channels 116 and 118 there are respective pressure lines 111A, 111B opening into the interior of the housing.

These opening of pressure lines 111A, 111B, 112 and 113 fit to corresponding openings of a pneumatic adapter member 170 to be described later in detail.

Between the openings of the pressure channels there are threads 114 into which bolts are mounted to fasten a connection bar 140.

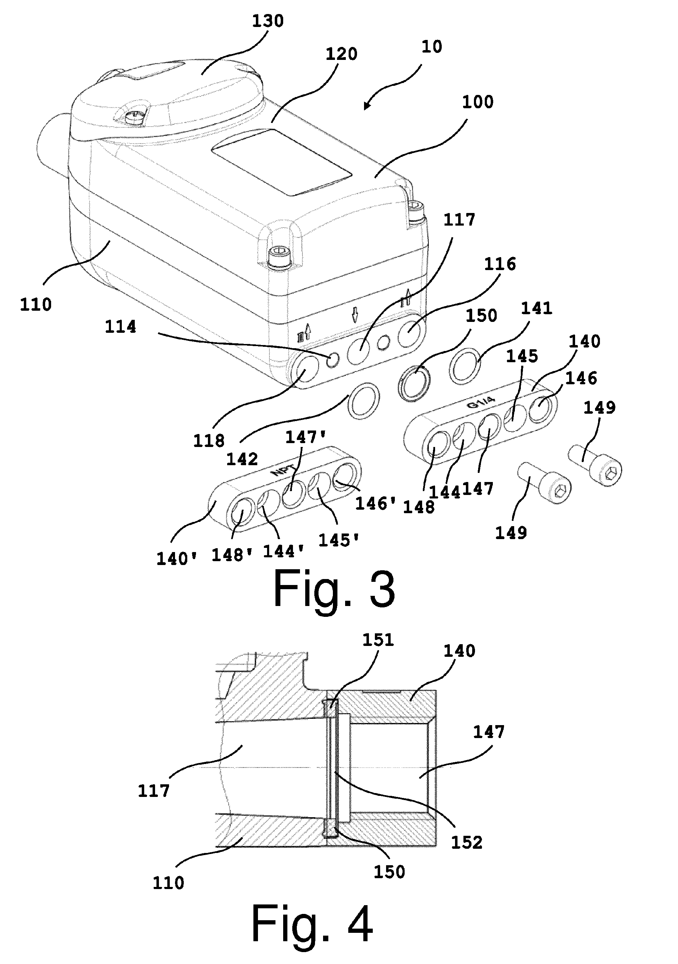

As shown for instance in Fig. 3 connection bars 140 and 140' with different threads can be used. For instance the connection bar 140 comprises pressure channels 146, 147 and 148 having BSPP threads, for instance 1/4 inch threads which are marked as G1/4. As shown, the alternative connection bar 140' has pressure channels 146', 147' and 148' with NPT threads. Holes 144', 145' are provided similar to the holes 144 and 145 of connection bar 140.

The housing 100 is separated into two compartments, and a terminal compartment 101 and an electronic compartment 102. The upper portion 120 of the housing 100 comprises an opening 121 being covered by a cover 130. There is a sealing 131 between the cover 130 and the rim of opening 121 such that the terminal compartment 101 is sealed when the cover 130 is closed.

The terminal compartment 101 is located in the upper portion 120 of the housing 100 and separated from the electronic compartment 102 by a wall 122. In the wall 122 there is a terminal opening 123 and a selecting switch opening 124.

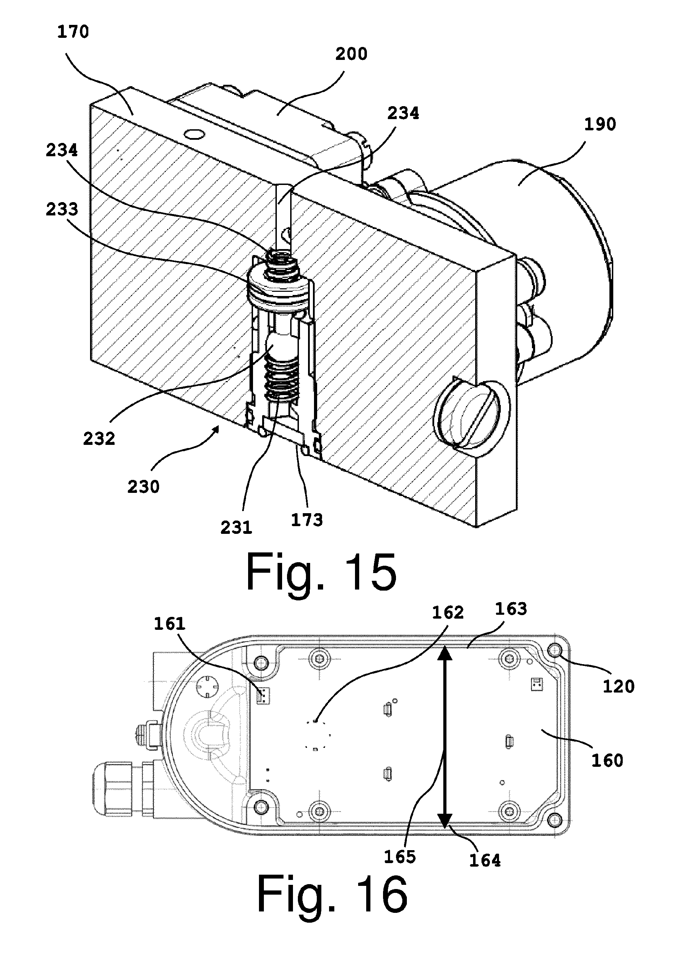

Within the housing there is disposed an electronic circuit board 160 having a board width 165 extending from one side 163 of the electronic circuit board 160 to the other side 164 thereof. The width 165 of the electronic circuit board 160 is shown in Fig. 16.

The board width 165 is essentially smaller that the terminal opening 123 and/or the selecting switch opening 124. This prevents the user to dismount the electronics when the cover 130 is opened for connecting the power supply to the terminal and/or for handling the selecting switch 162.

The opening width of opening 121 is also smaller than the board width 165 which is also preventing the user from dismounting the electronic circuit board 160 out of the housing 100.

To dismount the electronic circuit board 160 the upper portion 120 and the lower portion 110 of the housing need to be separated. These portions 110, 120 are preferably bolted together with bolts having a non-standard tool interface such that special tools are needed to separate the upper and lower portion from each other. For instance a torx tool interface may be used or another tool interface, preferably being very special and/or very difficult to get for the normal user.

A connection bar 140 is bolted with two bolts 149 to the lower portion 110 of the housing 100. In the mounting bar 140 there are two holes 144, 145 through which the bolts 149 are extending into respective threads provided at the lower portion 110.

In the connection bar there are pressure channels 146, 147 and 148. Pressure channel 146 corresponds or extends pressure channel 116 and is used for output pressure. Pressure channel 147 corresponds or extends pressure channel 117 and is used for input or supply pressure from a pressure source. Pressure channel 148 corresponds or extends pressure channel 118 and is used for output pressure.

Between the connection bar 140 and the lower portion 110 of the housing there are provided sealing elements 141, 142 between pressure channels 116, 146 and pressure channels 118, 148, respectively.

Between pressure channels 117, 147 there can be provided also a sealing element. However because of the sensitivity of the pneumatic components to dirt in the pressure supply, a filter member 150 in disposed between the pressure channel 117 and the pressure channel 147. The rim of the sealing member 150 can be designed as sealing element 151.

In the pressure channels 146, 147 and 148 there are threads provided for mounting the respective pressure lines for the pressure supply (pressure channel 147) and the output pressure (pressure channels 146 and 148). In order to provide different threads, appropriate connection bars 140 can be used and bolted to a standard housing 100.

In the lower portion 110 there are threads 119 provided close to the pressure lines 111A, 111B, 112 and 113.

A pneumatic adapter member 170 can be mounted to the lower portion 110 with bolts 179 to be treaded into threads 119.

The pneumatic adapter member has one or more internal connection lines 171, 172, 173, 174' and 175'. These pressure connecting lines are arranged to connect the pressure lines 111A, 111B, 112 and 113 in the lower portion 110 to the respective pressure openings of the pneumatic components.

For different designs with different pneumatic components the same design of the lower portion can be used and the pneumatic adapter member 170 can be adapted such that the pneumatic components can be connected as needed to the respective pressure channels.

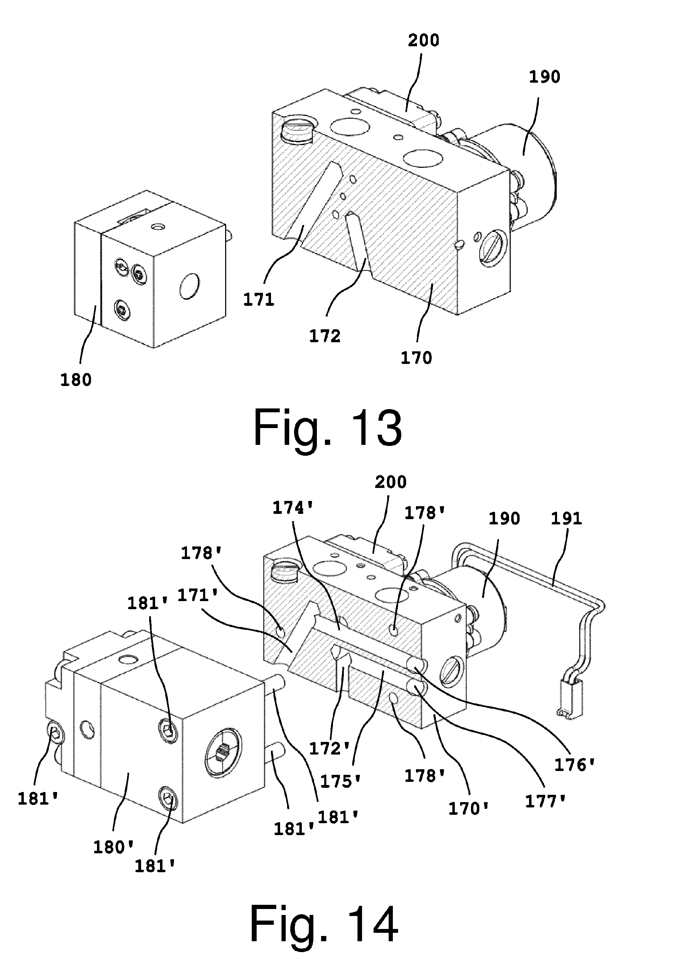

Reference is made for instance to Figs. 13 and 14 wherein alternative pneumatic adapter members 170, 170' are shown. The same elements are designated with the same reference numerals except for an added '.

If needed some pressure connecting lines can be sealed with balls 176', 177' to the environment, as for instance shown in Fig. 14, where pressure connecting lines 174', 175' are closed with a ball 176'; 177'. Pressure connecting line 174' is providing the pressure connection between the output of amplifier 180' and pressure channel 116 via pressure connecting line 171'. Pressure connecting line 175' is providing the pressure connection between pressure channel 117 via pressure connecting line 172' with input of amplifier 180'.

Fig. 13 shows a pneumatic adapter member 170 to be used in connection with a single acting pneumatic amplifier 180, whereas Fig. 14 shows a pneumatic adapter member 170' to be used in connection with a double acting pneumatic amplifier 180'. The pneumatic amplifier 180' is bolted to the pneumatic adapter member 170' with bolts 181' screwed into threaded holes 178' of the pneumatic adapter member 170'.

In the pneumatic adapter member 170 there are threads 178 provided for receiving bolts 181, 181' to be used to mount pneumatic components to the pneumatic adapter member 170.

The pneumatic components can be any one of a pneumatic amplifier 180, an electro-pneumatic converter 190 and/or a pneumatic pre-amplifier 200. Other pneumatic components usually used within valve positioners are also envisaged to be mounted to the pneumatic adapter member.

A signal input line 191 is connected to the electro-pneumatic converter 190 which is converting the electrical signal to a pressure signal in a manner known to the skilled person.

Optionally an adapter bar or option bar 210 can be mounted between the connection bar 140 and the lower portion 110 of the housing 100.

The adapter bar 210 can be used to connect any other pneumatic components to the pressure channels.

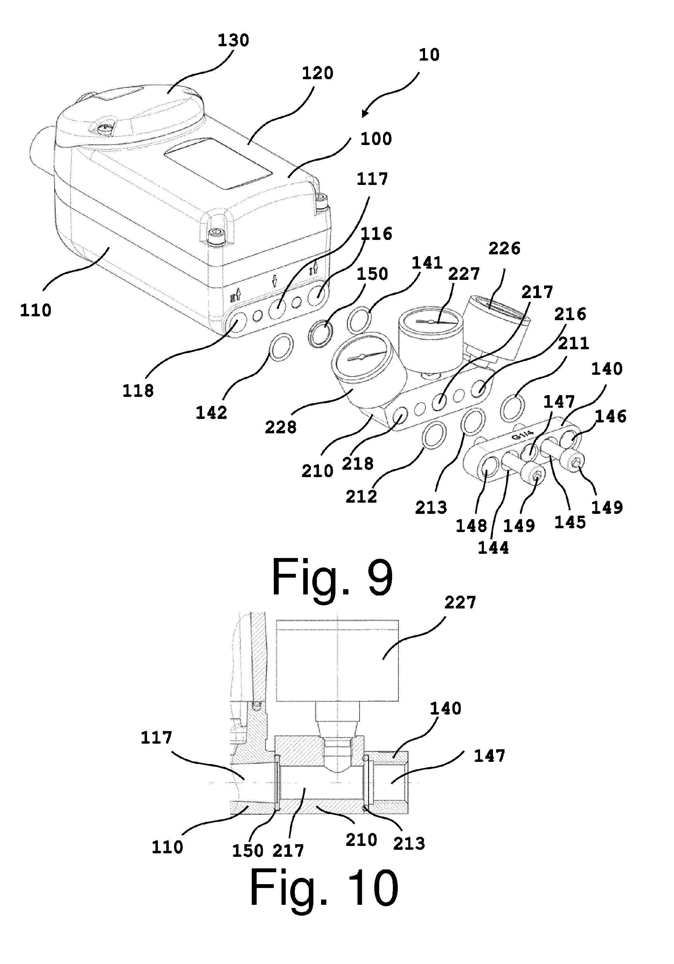

For instance the adapter bar 210 can be used to connect one or more manometers to the respective pressure channels as shown in Fig. 9. In the adapter bar 210 there are three pressure channels 216, 217 and 218. Between the adapter bar 210 and the connection bar 140 there are sealing elements 212, 213 and 214 for sealing between the respective pressure channels pairs 146, 216 and 147, 217 and 148, 218. At the adapter bar 210 there are three manometers 226, 227 and 228 for indicating the pressure in the respective pressure channel 216, 217 and 218. These manometers 226, 227 and 228 are connected to the respective pressure channel 216, 217, 218 in the adapter bar by means of a suitable pressure connections provided in the adapter bar 210.

In pressure line 173 there is provided a pressure reducing valve 230 as shown in Fig. 15. The pressure reducing valve comprises a spring 231, a ball 232, a valve member 233 and a second spring 234. The pressure reduction can be adjusted by choosing appropriate spring characteristics.

Since the electro-pneumatic converter cannot stand high pressures without getting damaged, the pressure reducing valve can be used to limit the maximum pressure applied to the electro-pneumatic converter.

Because the pressure reducing valve can be provided in the pneumatic adapter member, higher pressures can be used providing a better efficiency for the pressure amplification.

The electro-pneumatic converter and the pneumatic pre-amplifier need less pressure to be operated than the pneumatic amplifier. The pneumatic amplifier can be operated for instance with 10 bar whereas the other pneumatic components can be operated by for instance 2.5 bar.

If the above description recites "first" and "second" features, this wording is selected to differentiate between elements of equal kind without giving a ranking or a preference.

Those skilled in the art can now appreciate from the foregoing description that a broad teaching of the disclosure can be implemented in a variety of forms. Therefore, while this disclosure includes particular examples, the true scope of the disclosure should not be limited since other modifications will become apparent to the skilled practitioner upon a study of the drawings, the specification and the following claims.

## Claims

1. Valve positioner (10) for process control valves, the valve positioner having a housing (100), pneumatic components within the housing (100), a pressure supply input channel (147) and at least one pressure outlet channel (146; 148), wherein internal threads are provided at the pressure supply input channel (147) and at the at least one pressure outlet channel (146; 148),
**characterized in that** the valve positioner (10) further comprises a connection bar (110) comprising the internal threads.

2. Valve positioner according to claim 1, wherein the connection bar (110) is bolted to the housing.

3. Valve positioner according to any of the preceding claims, wherein a filter member (150) is disposed between the pressure supply input channel (147) of the connection bar (140) and the pressure supply input channel (117) of the housing (100).

4. Valve positioner according to any of the preceding claims, wherein sealing members (141; 142) are disposed between the at least one pressure outlet channel (146; 148) of the connection bar (140) and the at least one pressure outlet channel (116; 118) of the housing (100).

5. Valve positioned according to any of the preceding claims, wherein an adapter bar (210) is mounted between the housing (100) and the connection bar (140).

6. Valve positioner (10) for process control valves especially according to any of the preceding claims, the valve positioner having a housing (100), pneumatic components within the housing (100), a pressure supply input channel (147) and at least one pressure outlet channel (146; 148), wherein the pressure supply input channel (147) and the at least one pressure outlet channel (146; 148) are extending in a wall of the housing (100),
**characterized in that** the valve positioner (10) further comprises a pneumatic adapter member (170) connected to the pressure supply input channel (147) and/or the at least one pressure outlet channel (146; 148).

7. Valve positioner (10) according to any of the preceding claims, wherein the pneumatic adapter member (170) comprises pressure lines for connecting the pressure supply input channel (147) and/or the at least one pressure outlet channel (146; 148) with the pneumatic components of the valve positioner (10).

8. Valve positioner (10) according to any of the preceding claims, wherein the pressure supply input channel (117) and/or the at least one pressure outlet channel (116; 118) extending in a wall of the housing (10) are extending from the connection bar (140) to the pneumatic adapter member (170).

9. Valve positioner (10) according to any of the preceding claims, wherein the pressure supply input channel (117) and/or the at least one pressure outlet channel (116; 118) have a cross-section area which is similar to the cross-section area of the pressure lines to be connected to the connection bar (140).

10. Valve positioner (10) according to any of the preceding claims, wherein an electro-pneumatic converter (190), and/or a pneumatic amplifier (180) and/or a pneumatic pre-amplifier (200) are connected to the pneumatic adapter member (170).

11. Valve positioner (10) for process control valves especially according to any of the preceding claims, the valve positioner having a housing (100), an electronic circuit board (160) with a terminal (161) for connection the electric power supply to the electronic circuit board (160), an opening (121) for the terminal (241), and a cover (130) to cover the opening (121), the electronic circuit board (160) having a width, and the opening (121) having a width, **characterized in that** the width of the opening (121) is less than the width of the electronic circuit board (160).

12. Valve positioner (10) for process control valves especially according to any of the preceding claims, the valve positioner having a housing (100), an electronic circuit board (160) with a terminal (161) for connection the electric power supply to the electronic circuit board (160), the housing (100) having an lower portion (110) and an upper portion (120),
**characterized in that** one of lower portion (110) and an upper portion (120) having a wall (122) covering the printed circuit board (160) and having an/the opening (121) for the terminal (161).

13. Valve positioner (10) for process control valves according to any of the preceding claims, wherein the upper portion (120) is covering the electronic circuit board (160) and/or the opening (121) is provided in the upper portion (120) of the housing (100).

14. Valve positioner for process control valves according to any of the preceding claims, wherein the lower portion is covering the electronic circuit board and/or the opening is provided in the lower portion of the housing.

15. Valve positioner (10) for process control valves according to any of the preceding claims, further comprising a selector switch (162), wherein selector switch (162) is mounted on the electronic circuit board (160), and wherein the selector switch (162) in disposed in the opening (121) or in another opening in the wall (122).
